# EUROPEAN PATENT APPLICATION

(11) **EP 4 647 255 A1**
(43) Date of publication of application: **12.11.2025**
(21) Application number: 25175185.5
(22) Date of filing: 08.05.2025
(51) Int. Cl.: B32B 18/00, C04B 35/565, C04B 35/80, C04B 38/00, F01D 5/28, F01D 25/12

(54) **CORES FOR CERAMIC MATRIX COMPOSITE COMPONENTS**

(30) Priority: 10.05.2024 US 202463645292 P
(71) Applicant: RTX Corporation, Farmington, CT 06032 (US)
(72) Inventor: DWYER, John A., Colchester, 06415 (US); LILES, Howard J., Newington, 06111 (US)
(74) Representative: Dehns

(57) **Abstract**

The preparation of ceramic matrix composite (CMCs) is disclosed in which a ceramic matrix composite (CMC) preform is made with one or more integrated polymer core inserts (100a, 100b) having a base structure made of a fugitive material comprising polyvinyl butyral (PVB), and one or more flow modification elements (110a; 100b; 120a; 120b; 120c; 120d) made of a non-fugitive material. The preform with integrated polymer core inserts (100a, 100b) is subjected to a heat treatment to remove the PVB base structure made of the one or more polymer core inserts (100a, 100b) (e.g., by melting or burning) while retaining the one or more flow modification elements (110a... 120d). Removal of the PVB base structure forms one or more internal cavities within the composite with the one or more flow modification elements (110a... 120d) positioned therein. The preform can then be subjected to densification to form the CMC.

## Description

### FIELD OF THE INVENTION

The present disclosure relates generally to methods for manufacturing ceramic matrix composites (CMCs). In particular, the present disclosure concerns manufacturing CMC components with internal cavities, for example, to provide cooling channels.

### BACKGROUND OF THE INVENTION

Due to their heat resistance, ceramic matrix composite materials are used in manufacturing devices that are subject to high temperature exposure (e.g., ≥1200°C) such as gas turbine engines. However, in high temperature applications, even turbomachinery parts made from CMCs can experience stress, for example, due to formation of thermal gradients. These stresses can reduce the operational lifespan of the CMC components. In such cases, it is often desirable to provide CMC components with structures to facilitate cooling during operation, particularly near surfaces where the component comes into contact with high temperature gases.

For example, the skins of CMC components, i.e., the regions close to the gas flow path (e.g., depth of 0.010" to 0.1" (0.254 mm to 2.54 mm) below the outer surface) can be provided with cooling structures, e.g., holes, channels, or similar cavities, to enhance cooling and improve heat distribution. In particular, such structures can form parts of circuits that provide for flow of a coolant such as air. However, creating such cooling structures in CMC components can be challenging due to their unique method of manufacturing and their material properties.

Current methods employed for creating such structures include drilling and machining holes, pockets or channels into surfaces and using plates to cover the resultant structures. Other methods involve using a mandrel during layup which is subsequently removed leaving a hollow cavity. These techniques are expensive. Also, they are line of sight manufacturing techniques which limit the types and shapes of cooling structures that can be created and, thus, are not always able to generate ideal shapes and cooling features desired from an optimized heat transfer perspective. Additionally, these traditional methods do not permit the inclusion of structures within cooling channels that can direct, deflect, or restrict fluid flow to optimize coolant flow.

The need exists to provide techniques that exhibit greater flexibility and allow for the creation of more complex internal structures in the manufacturing of CMC components with internal structures, as wells as such methods that provide cooling channels that enhance performance by increasing cooling efficiency and by minimizing leakage. Further, the need exists for methods that can provide such internal structures at lower costs.

### SUMMARY OF THE INVENTION

According to an aspect of the disclosure, there is provided a method comprising:
preparing a ceramic matrix composite (CMC) preform with one or more integrated polymer core inserts,
wherein each of the one or more integrated polymer core inserts comprises a base structure made of a fugitive material comprising a binder that poses minimal or no chemical interaction with a CVI process, e.g., polyvinyl butyral (PVB) or polyvinyl alcohol (PVA), and one or more flow modification elements made of a non-fugitive material;
subjecting the preform with the one or more integrated polymer core inserts to a heat treatment to remove the base structures of the one or more polymer core inserts, wherein removal of the base structures of the one or more polymer core inserts forms one or more internal cavities within the composite in which the flow modification element(s) are positioned; and
densifying the preform to form a ceramic matrix composite component with the one or more internal cavities containing the flow modification element(s).

According to another aspect of the present disclosure, there is provided a ceramic matrix composite (CMC) intermediate comprising a preform formed from fabric prepreg sections containing fibers, CMC matrix precursors, and binder, and further comprising one or more PVB or PVA inserts polymer core inserts integrated into the preform, wherein each of the one or more integrated polymer core inserts comprises a base structure made of a fugitive material comprising a binder that poses minimal or no chemical interaction with a CVI process, e.g., polyvinyl butyral (PVB) or polyvinyl alcohol (PVA), and one or more flow modification elements made of a non-fugitive material.

According to another aspect of the present disclosure, there is provided a method of preparing a ceramic matrix composite (CMC) intermediate comprising forming a preform by laying up fabric prepreg sections containing fibers, CMC matrix precursors, and binder, and, during the laying up of the fabric prepreg sections, inserting one or more core inserts into the preform, wherein each of the one or more integrated polymer core inserts comprises a base structure made of a fugitive material comprising a binder that poses minimal or no chemical interaction with a CVI process, e.g., polyvinyl butyral (PVB) or polyvinyl alcohol (PVA), and one or more flow modification elements made of a non-fugitive material.

In further examples of the present disclosure, including further examples of each of the above exemplary aspects, the flow modification elements are ceramic fibers or bundles of fibers, referred to as tows, such as SiC fibers or tows.

In further examples of the present disclosure, including further examples of each of the above exemplary aspects or examples, the flow modification elements are pre-densified ceramic fabric elements, such pre-densified SiC/SiC fabric elements.

In further examples of the present disclosure, including further examples of each of the above exemplary aspects or examples, the flow modification elements are positioned along the polymer core insert(s), e.g., in the form of chevrons or rings, so as to increase turbulence of fluid flowing through the cavities formed by removal of the polymer core insert(s).

In further examples of the present disclosure, including further examples of each of the above exemplary aspects or examples, the flow modification elements are positioned in the polymer core insert(s) so as to deflect and/or guide fluid flowing through the cavities formed by removal of the polymer core insert(s).

In further examples of the present disclosure, including further examples of each of the above exemplary aspects or examples, the flow modification elements are positioned in the polymer core insert(s) so as to support the walls of cavities formed by removal of the polymer core insert(s).

In further examples of the present disclosure, including further examples of each of the above exemplary aspects or examples, the fugitive material of the polymer core insert(s) comprises polyvinyl butyral or polyvinyl alcohol.

In further examples of the present disclosure, including further examples of each of the above exemplary aspects or examples, the polymer core insert(s) are prepared by injection molding.

In further examples of the present disclosure, including further examples of each of the above exemplary aspects or examples, the polymer core insert(s) are prepared using additive manufacturing.

In further examples of the present disclosure, including further examples of each of the above exemplary aspects or examples, the base structure of the polymer core insert(s) may have a generally linear structure. Alternatively, the base structure of the polymer core insert(s) may have a non-linear structure and/or may include non-line of sight features.

In further examples of the present disclosure, including further examples of each of the above exemplary aspects or examples, the base structure of the polymer core insert(s) may have a width of 0.015 to 0.050 inches (0.381 to 1.27 mm) in the direction normal to the fabric plies that form the preform.

In further examples of the present disclosure, including further examples of each of the above exemplary aspects or examples, the ceramic matrix composite is a SiC/SiC composite.

In further examples of the present disclosure, including further examples of each of the above exemplary aspects or examples, the preform is constructed such that the polymer core insert(s) are positioned adjacent an exterior surface of the preform, for example, at a depth of 0.010" to 0.1" (.254 to 2.54 mm) below an outer surface of the preform.

According to a further method aspect of the present disclosure, the base structure of the polymer core insert(s) is removed by heating the preform to a temperature at which the base structure of the polymer core insert(s) will melt but does not adversely impact the flow modification element(s). Alternatively, according to another method aspect of the present disclosure, the base structure of the polymer core insert(s) is removed by heating the preform to a temperature at which the base structure burns but does not adversely impact the flow modification element(s).

In further examples of the present disclosure, including further examples of each of the above exemplary aspects or examples, the method includes drilling holes into the ceramic matrix composite component to provide passageways into the internal cavities.

In further examples of the present disclosure, including further examples of each of the above exemplary aspects or examples, the preform is prepared by laying up fabric prepreg sections containing fibers, CMC matrix precursors, and binder, and incorporating the polymer core insert(s) into the preform during the layering up of fabric prepreg sections.

In further examples of the present disclosure, including further examples of each of the above exemplary aspects or examples, the preform is densified by chemical vapor infiltration. Alternatively, melt infiltration (MI) or polymer infiltration process (PIP) could be used after a CVI densification.

### BRIEF DESCRIPTION OF FIGURES

Implementations of the inventive concepts disclosed herein may be better understood when consideration is given to the following detailed description thereof. Such description make refers to the included drawings, which are not necessarily to scale, and which some features may be exaggerated and some features may be omitted or may be represented schematically in the interest of clarity. Like reference numerals in the drawings may represent and refer to the same or similar element, feature, or function. In the drawings:
Fig. 1 shows a cross sectional side view of a CMC preform without polymer core insert;
Figs. 2A-2E show various forms of flow modification elements;
Fig. 3 shows a top view of a polymer core insert with various forms of flow modification elements; and
Fig. 4 shows a cross sectional top view of a preform with polymer core inserts containing flow modification elements positioned along the intended flow path of coolant fluid for diverting/defecting/guiding fluid flow.

### DETAILED DESCRIPTION OF THE INVENTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

By providing internal cavities within CMC components, particularly near the skin or outer surface of the component, it is possible to provide means for cooling the component to reduce high temperatures and improved heat distribution, thereby reducing stress caused by thermal gradients. Current techniques for providing cavities to create cooling passageways in CMC components include drilling and machining. However, such techniques are expensive and are limited with respect to the types of cavities that can be formed.

Using polyvinyl butyral (PVB) core inserts in accordance with the present disclosure, internal cavities can be formed in CMCs in a manner that will provide the ability to focus cooling in high temperatures areas and produce cooling circuits that can improve heat distribution. Additionally, the PVB core inserts provide the ability to form a large variety of cooling circuits including complex circuits having non-linear structures and/or non-line of sight features. Moreover, the PVB core inserts with flow modification elements provide the ability to include complex internal structures within the cooling circuits formed after removal of the base structure of the PVB core inserts.

Polyvinyl butyral is a relatively inexpensive material and its chemistry is compatible with CMC materials. Further, polyvinyl butyral has a relatively low melting point of 329°F (165°C) to 365°F (185°C) and a combustion temperature of around 670°F (354°C), making removal of the PVB core inserts relatively easy. For example, heating the preform with integrated core insert(s) in an oxidizing atmosphere (e.g., air) to a temperature of 360°F - 800°F (182°C - 427°C) (such as 400°F - 700°F (204°C - 371°C)) will burn off the PVB. Thus, PVB core inserts provide a low cost means for forming internal cavities within CMC components. The use of such cores can also eliminate the need for cover plates, as used in the previously mentioned machining techniques, thereby providing further cost savings.

The PVB core inserts can be manufactured by, for example, injection molding or additive manufacturing such as fused deposition modeling (FDM) or selective laser sintering (SLS). Using such techniques, the structure of the PVB core inserts, and hence the internal cavities formed therefrom, can vary widely, and can include complex formations.

For example, the PVB core insert can have an elongated linear structure such as a rod, bar, or prism for producing a cavity which is a channel having, e.g., a circular, square, or rectangular cross section. Alternatively, the PVB core insert can have a non-linear shape or can exhibit non-line of sight features. For example, the PVB core insert can have a wavy or serpentine shape to provide channels having curved structures. Alternatively, the PVB core insert can have a step structure connecting two parallel linear structures or can have sections with different widths or cross-sectional shapes, e.g., two cylindrical sections having cross sections with different diameters.

The height of the core insert, i.e., in the direction normal to the plies of the preform, is for example, 0.015 to 0.050 inches (0.381 to 1.27 mm). The length of the PVB core inserts can vary, taking into account the size of the CMC component to be made, and the width of the PVB core inserts can vary, taking into account the desired structural integrity of the CMC component.

The composite intermediate, i.e., the preform with the one or more integrated PVB core inserts, is prepared by laying up fabric prepreg sections (also called tapes or plies) containing fibers (e.g., a 2D weave of warp and weft fibers), CMC matrix precursors, and binder. During the layup, the PVB core insert(s) are positioned in the preform and cover with further fabric prepreg sections whereby the PVB core insert(s) are embedded into the preform. The fabric plies can also be cut into various shapes and arrangements to "nest" with the PVB core on the same layer.

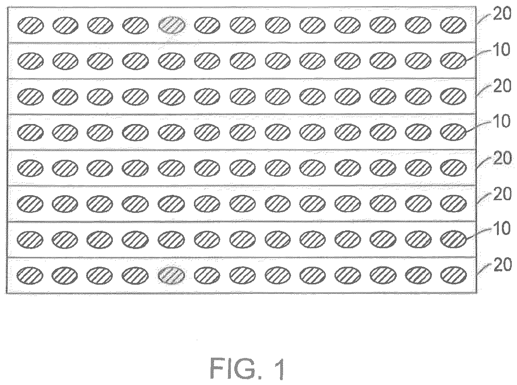

Fig. 1 shows a preform that does not contain a core insert. In this depiction, the circles represent the cross section of warp fibers 10 (or bundles of fibers) in each of the fabric layers 20. It is to be understood that each of these layers also contain weft fibers (not shown) woven in between the warp fibers.

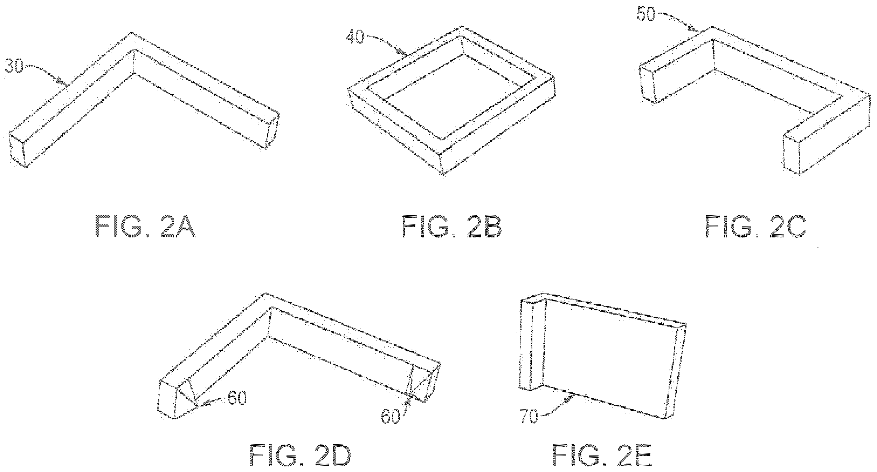

Fig. 2A-2E show examples of flow modification elements in accordance with the present disclosure. The shape of the flow modification elements can vary widely depending on the desired effect on fluid flow. The flow modification elements can, for example, take the shape of chevrons 30, as shown in Fig. 2A, that will be positioned along a portion of the exterior of the PVB base structure. Once the PVB base structure is removed leaving behind the resultant cavity, the chevron shaped flow modification elements will be positioned along the wall of the cavity and will induce turbulent fluid flow, e.g., coolant fluid flowing through the cavity. Additionally, such flow modification elements can provide support to the cavity and thus aid in preventing the cavity from collapsing during and after densification. Additionally, the flow modification elements can include sections that extend away from the base structure of the core insert to also aid in anchoring the element in the fabric preform, such as the legs of the chevron shape of Fig. 2A.

The flow modification elements can also be, for example, ring shaped 40, as shown in Fig. 2B, and be positioned around the perimeter of the PVB base structure. Here again, such ring-shaped flow modification elements can induce flow induce turbulence and/or provide support for the cavity. Another possibility is a U-shaped 50 flow modification element which also can provide turbulence and/or support. The flow modification elements such as the ring-shape and U-shape can also be used as flow restrictors between sections of the cavity. The flow modification elements can extend from a wall of the cavity to reduce the cross section of the flow path there by restricting flow.

The flow modification elements can include raised or spiked regions 60 which can be used to anchor the element in the fabric preform, as shown in Fig. 2D. Additionally, the flow modification elements can include sections that extend away from the base structure of the core insert to also aid in anchoring the element in the fabric preform.

Also, the flow modification elements can be positioned along the intended flow path of fluid within the cavity and thereby guide fluid flow. See, e.g., Fig. 2E. For example, if the cavity includes a turn such fluid flow will be forced to change direction, a flow modification element 70, such as shown in Fig. 2E, can be positioned within the flow path to facilitate the change in fluid flow direction.

The flow modification elements can be made from one or more ceramic fiber tows. The tows, e.g., SiC fiber bundles (tows), are pre-pegged. Pre-pegged means that the tows are embedded in/surrounded by a binder resin, e.g., PVB resin. The tows can be used individually or a plurality of tows can be combined and then shaped into the desired form. Generally, the diameters of the tows can be 5 to 20 mils (0.127 to 0.508 mm), although the diameter can be up to 40 mils (1.016 mm).

Alternatively, the flow modification elements can be made from pre-densified CMC material, i.e., pieces of ceramic fabric prepreg sections, such SiC/SiC fabric prepreg sections, shaped into the desired form. The fiber tows are made of unidirectional fibers, whereas the fabric prepreg sections are woven materials, e.g., a 2D weave of warp and weft fibers.

As noted above, the PVB core inserts can be manufactured by, for example, injection molding or additive manufacturing. In the case of injection molding, the flow modification elements can be placed in the mold and then the PVB plastic material is injected into the mold. In the case of additive manufacturing, the flow modification elements are incorporated into the PVB base structure during its manufacturing.

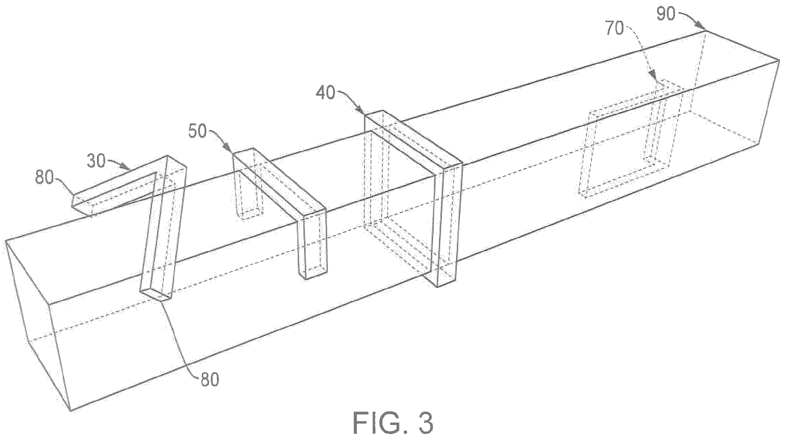

Fig. 3 shows an embodiment where the base structure 90 of the core insert is in the form of extended rod or prism. The flow modification element 30 is in the shape of a chevron and is incorporated into the top surface of the base structure 90. Further, as shown in Fig. 3, the flow modification elements include portions 80 that extend way from the base structure which can be used to help anchor the flow modification elements in the preform during fabric layup. Fig. 3 also shows a ring-shaped flow modification element 40, a U-shaped flow modification element 50, and flow path flow modification element 70 incorporated into the base structure 90 of the core insert.

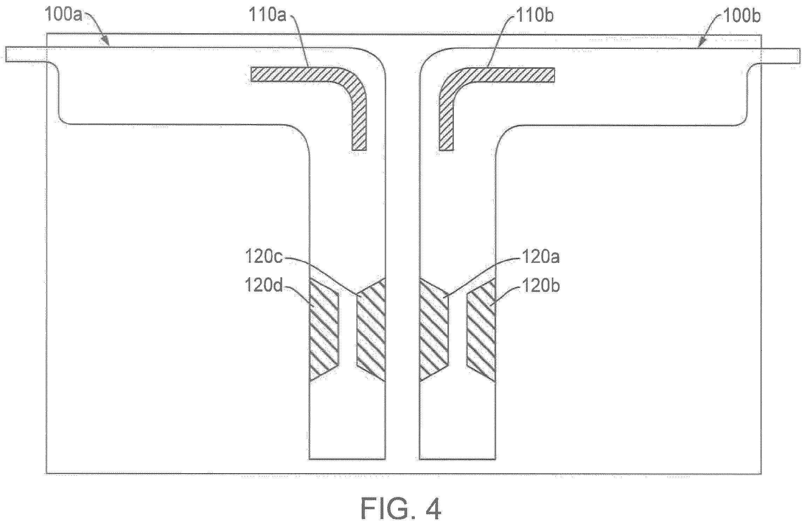

Fig. 4 shows a cross sectional top view of a preform that includes two core inserts 100a and 100b. Embedded in the base structure of each of the core insert is a flow modification element 110a and 110b, which is like that of Fig. 2E, positioned at a corner structure of the core insert along the intended flow path of coolant fluid. Thus, once the base structure is removed, the flow modification elements will be positioned within the flow path to facilitate the change in fluid flow direction. Also shown in Fig. 4 are flow modification elements 120a to 120d. These flow modification elements shaped like ramps are flow restrictors that restrict flow by reducing the cross section of the flow path.

Once formed, the preform is subject to a treatment to remove the base structure of the PVB core insert(s). For example, the preform can be heated to a temperature above the melting point of PVB, for example, heated to 365°F (185°C) to 670°F (354°C). Melted PVB can then be removed through pores of the preform. To facilitate removal of the melted PVB, it is also possible to provide passageways through the preform to permit drainage. For example, during layup premade holes may be provided in the layup fabric so access to the core is provided. Also, laser holes may be drilled to the core depth, allowing for a drainage pathway.

Alternatively, the preform can be heated to a temperature sufficient to the PVB to burn, e.g., 700°F - 1000°F (371°C - 538°C) or 700°F - 800°F (371°C - 427°C). Gases resulting from the combustion are removed through pores or passageways as described above.

During and after removal of the PVB, the formed cavities can be held in shape by tooling. For example, the pre-densified preform can be held in place using graphite tooling with sufficient pressure being applied to prevent the empty cavities formed by the removal of the PVB from collapsing or deforming.

After removal of PVB and formation of the internal cavities, the preform is subjected to densification to form the CMC. Densification can be performed by chemical vapor infiltration (CVI) or alternatively using MI or PIP after CVI. CVI is a known technique to form matrices for fiber-reinforced material such as CMCs. In this technique, a heated gaseous matrix precursor infiltrates the porous fibrous preform and reacts with the fibers of the preform thereby forming a matrix around the fibers.

Following densification, it may be necessary to provide passageways from the exterior of the composite into the internal cavities in order to permit the flow of fluid, such as cooling air, into and out of the internal cavities. Such passageways can be achieved by, e.g., drilling holes into the composite.

The use of PVB core inserts with flow modification elements as disclosed herein can be used in the manufacture of CMCs to create a variety of internal cavities. Since, as noted above, PVB is compatible with CMC material chemically, the PVB core inserts can be used with a variety of CMC materials. For example, the resultant composite can be a SiC/SiC CMC, a Si₃N₄/SiC or an oxide/oxide CMC. The PVB core inserts with flow modification elements as disclosed herein provide a means for making cavities (e.g., cooling channels) in CMC components that are easy to manufacture at lower costs in comparison to known techniques involving drilling and machining. Further, the PVB core inserts with flow modification elements as disclosed herein provide a greater flexibility with regards to designing cooling channels, permitting the formation of complex structures that can be used to optimize heat exchange and reduce thermal gradients to alleviate stress formation.

The corresponding structures, material, acts, and equivalents of all means or steps plus function elements in the claims below are intended to include any structure, material, or act for performing the function in combination with other claimed elements are specifically claimed. The above description of the present invention has been presented for purposes of illustration and description, but is not intended to be exhaustive or limited to the invention in the form disclosed. Many modifications and variations will be apparent to those of ordinary skill without departing from the scope and spirit of the invention. The specific embodiment(s) described above were chosen and described in order to explain principles of the invention and the practical applications thereof, and to enable others of ordinary skill in the art to understand the invention for embodiments with various modifications as are suited to the particular use contemplated.

Modifications and equivalents may be made to the features of the embodiments described above without departing from the spirit or scope of the invention. Thus, it is intended that the present invention covers the modifications and variations disclosed above provided that these changes come within the scope of the claims and their equivalents.

## Claims

1. A method comprising:
preparing a ceramic matrix composite (CMC) preform with one or more integrated polymer core inserts (100a, 100b), wherein each of the one or more integrated polymer core inserts (100a, 100b) comprises a base structure (90) made of a fugitive material comprising a binder that poses minimal or no chemical interaction with a CVI process, e.g., polyvinyl butyral (PVB) or polyvinyl acetate (PVA), and one or more flow modification elements (30; 40; 50; 70; 110a; 110b; 120a; 120b; 120c; 120d) made of a non-fugitive material;
subjecting the preform with the one or more integrated polymer core inserts (100a, 100b) to a heat treatment to remove the base structures (90) of the one or more polymer core inserts (100a, 100b), wherein removal of the base structures (90) of the one or more polymer core inserts (100a, 100b) forms one or more internal cavities within the composite in which the flow modification element(s) (30... 120d) are positioned; and
densifying the preform to form a ceramic matrix composite component with the one or more internal cavities containing the flow modification element(s) (30... 120d).

2. The method according to claim 1, wherein the flow modification elements (30... 120d) are pre-pegged ceramic tows, optionally wherein the flow modification elements (30... 120d) are SiC tows pre-pregged with binder resin.

3. The method according to claim 1, wherein the flow modification elements (30... 120d) comprise pre-densified ceramic fabric elements (20), optionally wherein the flow modification elements (30... 120d) comprise pre-densified SiC/SiC fabric elements.

4. The method according to any preceding claim, wherein the one or more polymer core inserts (100a, 100b) are prepared by injection molding.

5. The method according to any of claims 1 to 3, wherein the one or more polymer core inserts (100a, 100b) are prepared by additive manufacturing.

6. The method according to any preceding claim, wherein:
the flow modification elements (30) have a chevron shape (30) and are positioned along a portion of the exterior of the base structure (90); or
the flow modification elements (40) have a ring shape (40) and are positioned along a perimeter of the base structure (90).

7. The method according to any of claims 1 to 5, wherein the flow modification elements (70) are positioned within the base structure (90).

8. The method according to any preceding claim, wherein the one or more polymer core inserts (100a, 100b) have a height of 0.015 to 0.050 inches (0.381 to 1.27 mm).

9. The method according to any preceding claim, wherein the ceramic matrix composite is a SiC/SiC composite.

10. The method according to any preceding claim, wherein the preform is constructed such that the one or more polymer core inserts (100a, 100b) are positioned adjacent an exterior surface of the preform.

11. The method according to any preceding claim, wherein removal of the base structures (90) of the one or more polymer core inserts is performed by heating the preform to a temperature at which the base structures (90) of the polymer core inserts will melt or to a temperature at which the base structures (90) of the polymer core inserts will burn.

12. The method according to any preceding claim, wherein said preform is prepared by laying up fabric prepreg sections (20) containing fibers (10), CMC matrix precursors, and binder and the one or more integrated core inserts (100a, 100b) are incorporated into preform during the layering up of fabric prepreg sections (20).

13. The method according to any preceding claim, wherein said densifying is performed by chemical vapor filtration infiltration.

14. A ceramic matrix composite (CMC) intermediate comprising a preform formed from fabric prepreg sections (20) containing fibers (10), CMC matrix precursors, and binder, and further comprising one or more polymer core inserts (100a, 100b) integrated into the preform, wherein each of the one or more integrated polymer core inserts (100a, 100b) comprises a base structure (90) made of a fugitive material comprising a binder that poses minimal or no chemical interaction with a CVI process, e.g., polyvinyl butyral (PVB) or polyvinyl acetate (PVA), and one or more flow modification elements (30... 120d) made of a non-fugitive material, optionally wherein the flow modification elements (30... 120d) are pre-pegged ceramic tows or pre-densified ceramic fabric elements.

15. A method of preparing a ceramic matrix composite (CMC) intermediate comprising:
forming a preform by laying up fabric prepreg sections (20) containing fibers (10), CMC matrix precursors, and binder, and, during the laying up of the fabric prepreg sections (20), inserting one or more integrated polymer core inserts (100a, 100b) into the preform, wherein each of the one or more integrated polymer core inserts (100a, 100b) comprises a base structure (90) made of a fugitive material comprising a binder that poses minimal or no chemical interaction with a CVI process, e.g., polyvinyl butyral (PVB) or polyvinyl acetate (PVA), and one or more flow modification elements (30... 120d) made of a non-fugitive material.
